# EUROPÄISCHE PATENTANMELDUNG

(11) **EP 2 354 073 A1**
(43) Veröffentlichungstag der Anmeldung: **10.08.2011**
(21) Anmeldenummer: 10153178.8
(22) Anmeldetag: 10.02.2010
(51) Int. Cl.: B66B 7/08, F16G 11/04

(54) **Tragmittelbefestigungseinrichtung einer Aufzugsanlage**

(71) Anmelder: Inventio AG, 6052 Hergiswil NW (CH)
(72) Erfinder: Ach, Ernst, 6030, Ebikon (CH); Fischer, Daniel, 1860, Aigle (CH)

(57) **Zusammenfassung**

Es wird eine Tragmittelbefestigungseinrichtung einer Aufzugsanlage mit einem um eine Schwenkachse (28) schwenkbaren Klemmelement (10), einem Gegenhalteelement (12) und einem zwischen Klemmelement (10) und Gegenhalteelement (12) angeordneten Bereich eines Aufzugtragmittels (14) vorgeschlagen, wobei das Klemmelement (10), das Gegenhalteelement (12) und das Aufzugtragmittel (14) derart gestaltet und angeordnet sind, dass eine Zugbelastung des Aufzugtragmittels (14) eine Drehung des Klemmelements (10) um die Schwenkachse (28) bewirkt, wodurch das Aufzugtragmittel (14) zwischen Klemmelement (10) und Gegenhalteelement (12) festgeklemmt wird.

## Beschreibung

Aus der Druckschrift EP 1 760 027 A1 ist eine Tragmittelendverbindung für einen Aufzug bekannt, bei der ein Tragmittel um mindestens zwei Umschlingungselemente in zwei Lagen, die eine gegenläufige Orientierung aufweisen, gewickelt ist, wobei in einer Ausgestaltung zumindest eines der mindestens zwei Umschlingungselemente beweglich angeordnet ist, und wobei eine Kraftübertragung zwischen dem Tragmittel und mindestens einem der mindestens zwei Umschlingungselemente mittels Reibung erfolgt.

Der Erfindung liegt insbesondere die Aufgabe zugrunde, eine einfache und sichere Befestigungseinrichtung für ein Tragmittel einer Aufzugsanlage bereitzustellen. Diese Aufgabe wird gemäß der Erfindung durch die Merkmale des Anspruchs 1 gelöst. Weitere Ausgestaltungen ergeben sich aus den Unteransprüchen.

Es wird eine Tragmittelbefestigungseinrichtung einer Aufzugsanlage mit einem um eine Schwenkachse schwenkbaren Klemmelement, einem Gegenhalteelement und einem zwischen dem Klemmelement und dem Gegenhalteelement angeordneten Bereich eines Aufzugtragmittels vorgeschlagen, wobei das Klemmelement, das Gegenhalteelement und das Aufzugtragmittel derart gestaltet und angeordnet sind, dass eine Zugbelastung des Aufzugtragmittels eine Drehung des Klemmelements um die Schwenkachse bewirkt, wodurch das Aufzugtragmittel zwischen einer Klemmfläche des Klemmelements und dem Gegenhalteelement festgeklemmt wird.
Unter einem "Aufzugtragmittel" soll in diesem Zusammenhang insbesondere ein flexibles Zugmittel zur Übertragung von Zug- und Gewichtskräften zwischen Komponenten einer Aufzugsanlage verstanden werden.
Unter einer "Schwenkachse" soll in diesem Zusammenhang insbesondere eine immaterielle Linie verstanden werden, um die sich das Klemmelement bei einer Schwenkbewegung dreht.

Durch eine solche Einrichtung wird eine besonders einfache und sichere Befestigungseinrichtung für ein Tragmittel einer Aufzugsanlage bereitgestellt. Insbesondere kann sich eine auf das Aufzugtragmittel wirkende Flächenpressung in Abhängigkeit von der Größe der im Aufzugtragmittel wirkenden Zugkraft selbst einstellen, wodurch das Aufzugtragmittel geschont und eine hohe Langlebigkeit des verwendeten Aufzugtragmittels erreicht werden kann. Vorteilhaft kann die Drehung des Klemmelements um die Schwenkachse bei Zugbelastung durch eine Haftreibung zwischen dem Klemmelement und dem Aufzugtragmittel bewirkt werden.

In einer vorteilhaften Ausgestaltung umfasst das Klemmelement eine gekrümmte erste Klemmfläche, und das Gegenhalteelement umfasst eine zweite Klemmfläche, die mit der gekrümmten ersten Klemmfläche des Klemmelements so zusammenwirkt, dass das Aufzugtragmittel durch Drehung des Klemmelements zwischen der ersten und der zweiten Klemmfläche festgeklemmt wird. Durch das Zusammenwirken der gekrümmten ersten Klemmfläche mit der zweiten Klemmfläche zur Klemmung bzw. Fixierung des Aufzugtragmittels kann eine einfache und sichere Befestigung des Aufzugtragmittels mit einer besonders gleichmäßigen Flächenpressung erzielt werden. Unter einer "gekrümmten Klemmfläche soll in diesem Zusammenhang insbesondere verstanden werden, dass eine in mindestens einem Punkt der Klemmfläche errichtete Tangentialebene höchstens diesen Punkt oder maximal eine Linie mit der Klemmfläche gemeinsam hat. Insbesondere soll in diesem Sinne auch eine Mantelfläche eines Zylinders als gekrümmte Fläche angesehen werden.

In einer vorteilhaften Ausführungsform ist die Klemmfläche des schwenkbaren Klemmelements um dessen Schwenkachse herum angeordnet, wobei bei einem rechtwinklig zur Schwenkachse gelegten Schnitt durch das Klemmelement die Klemmfläche eine Linie bildet, die in zumindest einem zusammenhängenden Bereich eines Drehwinkels um die Schwenkachse einen in einer Umfangsrichtung zunehmenden radialen Abstand von der Schwenkachse aufweist. Dadurch wird eine einfache und sichere Befestigung des Aufzugtragmittels durch Klemmung erreicht. Unter einem "zusammenhängenden Bereich eines Drehwinkels" soll in diesem Zusammenhang insbesondere ein zusammenhängender Bereich eines Winkels von einer Größe von mindestens 20° verstanden werden.

Ferner wird vorgeschlagen, dass bei der Linie, die bei einem rechtwinklig zur Schwenkachse gelegten Schnitt durch das Klemmelement durch die Klemmfläche gebildet wird, die Zunahme des radialen Abstands von der Schwenkachse im Wesentlichen einer Zunahme des radialen Abstands einer archimedischen Spirale entspricht. Das Klemmelement weist also eine Klemmfläche auf, deren radialer Abstand von der Schwenkachse des Klemmelements wie bei einer archimedischen Spirale zunimmt. Unter einer "archimedischen Spirale" soll in diesem Zusammenhang insbesondere eine ebene Spirale verstanden werden, bei der ein radialer Abstand vom Koordinatenursprung proportional zu einem Drehwinkel um den Koordinatenursprung anwächst. Durch die drehwinkelproportionale Zunahme des radialen Abstands der Klemmfläche des Klemmelements von der Schwenkachse kann eine besonders gleichmäßige Flächenpressung und eine sichere Befestigung des Aufzugtragmittels erreicht werden. Dies ist insbesondere dann der Fall, wenn auch das Gegenhalteelement so ausgestaltet ist, dass bei einem rechtwinklig zur Schwenkachse gelegten Schnitt durch das Gegenhalteelement die Klemmfläche des Gegenhalteelements zumindest in einem Teilbereich eine Linie bildet, die eine Zunahme des radialen Abstands von der Schwenkachse aufweist, die im Wesentlichen der Zunahme des radialen Abstands einer archimedischen Spirale entspricht. Vorteilhafterweise weisen dabei die die Geometrie der Klemmflächen des Klemmelements und des Gegenhalteelements definierenden archimedischen Spiralen im Wesentlichen dieselbe drehwinkelproportionale Zunahme des radialen Abstands von der Schwenkachse auf.
Unter dem Begriff "im Wesentlichen" soll in diesem Zusammenhang insbesondere verstanden werden, dass eine Abweichung von einer Linearität einer Abhängigkeit des radialen Abstands vom Drehwinkel innerhalb einer Toleranz von ± 5% liegt.

In einer weiteren vorteilhaften Ausgestaltung ist das Klemmelement als so genannte Exzenterrolle bzw. Exzenterscheibe ausgebildet, wobei bei einem rechtwinklig zur Schwenkachse gelegten Schnitt durch das Klemmelement dessen Klemmfläche eine Begrenzungslinie bildet, die in zumindest einem zusammenhängenden Bereich ein Kreisbogen ist. Das Zentrum dieses Kreisbogens ist dabei um eine gewisse Distanz "e", d. h., um eine Exzentrizität "e", von der Schwenkachse des Klemmelements entfernt angeordnet. Durch eine Ausgestaltung eines Teils einer Querschnittsfläche des Klemmelements als exzentrisch gelagertes Kreissegment kann sich die Klemmfläche des Klemmelements gut an die Klemmfläche des Gegenhalteelements anschmiegen, wenn die Klemmfläche des Gegenhalteelements ebenfalls als Teil eines Kreiszylindermantels ausgebildet ist. Mit einer solchen Ausgestaltung der Tragmittelbefestigungseinrichtung kann ebenfalls eine gleichmäßige Flächenpressung und eine sichere Befestigung des Aufzugtragmittels durch Klemmung erzielt werden. Unter einem "Kreissegment" soll in diesem Zusammenhang insbesondere ein Teil einer Kreisfläche verstanden werden, der von einem Kreisbogen als Teil eines Kreisumfangs und einer Kreissehne begrenzt ist.

Des Weiteren wird vorgeschlagen, dass die Klemmfläche des Klemmelements in zumindest einem zusammenhängenden Bereich eines Drehwinkels um die Schwenkachse bei einem Schnitt mit einer Ebene, in der die Schwenkachse liegt, eine Linie bildet, die parallel zur Schwenkachse liegt. Dadurch kann bei einem riemenartigen Aufzugtragmittel eine gleichmäßige Flächenpressung bei der Befestigung durch Klemmung erreicht werden, wodurch eine sichere Befestigung und eine hohe Langlebigkeit des verwendeten Aufzugtragmittels erzielt werden können. Vorzugsweise kann das Klemmelement in Form eines geraden Zylinders mit zueinander paralleler, ebener Grund- und Deckfläche und einer Mantelfläche, die senkrecht zur Grund- und Deckfläche angeordnet ist, ausgebildet sein, wodurch eine besonders einfache Herstellung möglich ist.

In einer weiteren Ausgestaltung weist die Klemmfläche des Klemmelements in zumindest einem zusammenhängenden Bereich eines Drehwinkels um die Schwenkachse zur zumindest teilweisen Aufnahme des Aufzugtragmittels eine entlang einer Umfangsrichtung verlaufende konkave Ausnehmung auf. Auf diese Weise wird bei einem runden Aufzugtragmittel eine Berührungsfläche zwischen Aufzugtragmittel und Klemmelement vergrößert. Dadurch kann eine besonders niedrige Flächenpressung zur mechanischen Schonung des Aufzugtragmittels erzielt und gleichzeitig eine einfache und sichere Befestigung durch eine Klemmung erreicht werden. Unter "konkav" soll in diesem Zusammenhang insbesondere nach innen, ausgehend von einem Punkt des Umfangs des Klemmelements zur Schwenkachse gerichtet, gewölbt ausgeformt verstanden werden.

Ferner wird vorgeschlagen, dass das Gegenhalteelement in einem Gehäuse angeordnet ist, in dem auch das mindestens eine Klemmelement um seine Schwenkachse schwenkbar angeordnet ist, wobei das Gegenhalteelement die zweite Klemmfläche umfasst. Ausserdem dient das Gehäuse dazu, Tragkräfte vom Aufzugtragmittel auf eine Stützstruktur in der Aufzugsanlage zu übertragen. Mit einer solchen Tragmittelbefestigungseinrichtung wird eine besonders einfache Befestigung des Aufzugtragmittels bereitgestellt und eine besonders einfache Einleitung der Tragkräfte in die Stützstruktur einer Aufzugsanlage erreicht. Vorzugsweise kann eine Ankopplung des Gehäuses an die Stützstruktur mittels eines Stangenelements mit angeformtem Außengewinde erfolgen, das in eine an der Oberseite des Gehäuses angeordnete Gewindebohrung eingeschraubt wird. Dem Fachmann sind dazu weitere, gängige Befestigungsmethoden bekannt.

In einer vorteilhaften Ausgestaltung der Tragmittelbefestigungseinrichtung ist ein rechtwinklig zur Schwenkachse gelegter Schnitt durch die zweite Klemmfläche des in dem Gehäuse angeordneten Gegenhalteelements von einer durch die zweite Klemmfläche erzeugten Linie begrenzt, welche Linie in zumindest einem zusammenhängenden Bereich eines Drehwinkels um die Schwenkachse einen in einer Umfangsrichtung zunehmenden radialen Abstand von der Schwenkachse aufweist oder Teil einer Kreisperipherie ist.
Mit einer solchen Ausgestaltung des Gegenhalteelements wird erreicht, dass das Aufzugtragmittel zwischen gleichsinnig gekrümmten Klemmflächen geklemmt und in der Folge eine besonders gleichmässige Klemmdruckverteilung im Aufzugtragmittel resultiert.

In einer weiteren vorteilhaften Ausgestaltung sind das Gehäuse und das Gegenhalteelement einstückig ausgebildet. Gehäuse und Gegenhalteelement sind also zu einem einzigen Bauteil kombiniert, wodurch eine besonders einfache Befestigung des Aufzugtragmittels durch Klemmung realisierbar ist. Vorteilhaft kann dadurch auch eine besonders einfache Einleitung der Tragkräfte in die Stützstruktur einer Aufzugsanlage erreicht werden.

Des Weiteren wird vorgeschlagen, dass die Tragmittelbefestigungseinrichtung zumindest zwei im Gehäuse angeordnete, unabhängig voneinander schwenkbare Klemmelemente umfasst. Auf diese Weise können in der Aufzugsanlagentechnik übliche Aufhängungen mit mehreren parallel zueinander angeordneten Aufzugtragmitteln in besonders einfacher Weise befestigt werden. Vorteilhafterweise kann durch die unabhängig voneinander schwenkbaren Klemmelemente eine Vergleichmäßigung der in den einzelnen Aufzugtragmitteln wirkenden Zugkräfte erreicht werden, weil die Drehung der jeweiligen Klemmelemente in Abhängigkeit der wirkenden Zugkräfte erfolgt.

In einer weiteren vorteilhaften Ausgestaltung weisen die zumindest zwei im Gehäuse angeordneten Klemmelemente eine gemeinsame Schwenkachse auf, wodurch eine besonders einfache Montage bei der Befestigung der Aufzugtragmittel erreicht werden kann. Zur Verdeutlichung wird wiederholt, dass unter einer "gemeinsamen Schwenkachse in diesem Zusammenhang insbesondere eine gemeinsame immaterielle Linie verstanden werden soll, um die sich die Klemmelemente bei einer Schwenkbewegung drehen.

In einer weiteren möglichen Ausführungsform der Tragmittelbefestigungseinrichtung ist das Gegenhalteelement als Gegenklemmelement ausgeführt, wobei das Gegenklemmelement und das Klemmelement symmetrisch bzw. spiegelbildlich zum dazwischen liegenden Aufzugtragmittel und um jeweils eine zugehörige Schwenkachse schwenkbar so angeordnet sind, dass eine Zugbelastung bzw. eine Abwärtsbewegung des Aufzugtragmittels eine Drehung des Klemmelements wie auch des Gegenklemmelements bewirkt, wodurch das Aufzugtragmittel zwischen dem Klemmelement und dem Gegenklemmelement festgeklemmt und eine Bewegung des Aufzugtragmittels in Richtung der Zugbelastung verhindert wird.

Eine weitere Ausgestaltungsmöglichkeit besteht darin, dass die Tragmittelbefestigungseinrichtung mindestens zwei in Längsrichtung des Aufzugtragmittels hintereinander angeordnete Klemmelementgruppen enthält, wobei jede der Klemmelementgruppen ein Klemmelement und ein Gegenklemmelement umfasst, und wobei die mindestens zwei Klemmelementgruppen gemeinsam auf ein einziges Aufzugtragmittel wirken. Mit einer solchen Tragmittelbefestigungseinrichtung kann die erforderliche Haltekraft auf mehrere Klemmstellen verteilt werden. Indem beispielsweise als Exzenterrollen ausgeführte Klemmelemente von hintereinander angeordneten Klemmelementgruppen mit unterschiedlicher Exzentrizität, oder indem Klemmelemente mit spiralförmig zunehmendem Radius mit unterschiedlicher Spiralsteigung ausgeführt werden, kann eine zusätzlich verbesserte Verteilung der Haltekraft auf die mehreren Klemmelementgruppen erreicht werden.

Es wird ferner vorgeschlagen, dass die Tragmittelbefestigungseinrichtung zumindest ein flachriemenartiges Aufzugtragmittel umfasst. Dadurch können die in der Aufzuganlagentechnik bekannten flachriemenartigen Aufzugtragmittel in sehr einfacher Weise befestigt werden. Vorzugsweise kann das flachriemenartige Aufzugtragmittel mit einem Elastomer-Mantel und darin eingebetteten Verstärkungsmitteln in Form von Stahldrahtseilen oder Kunstfaserseilen oder hochfesten Kunststoff-Folien ausgebildet sein.

Zudem wird vorgeschlagen, dass die Tragmittelbefestigungseinrichtung in einer weiteren Ausgestaltung zumindest ein Aufzugtragmittel mit einem im Wesentlichen kreisförmigen Querschnitt umfasst. Dadurch können die in der Aufzuganlagentechnik verbreiteten Aufzugtragmittel mit im Wesentlichen kreisförmigem Querschnitt in sehr einfacher Weise befestigt werden. Vorzugsweise kann das Aufzugtragmittel als rundes Seil aus Stahldraht oder Kunstfaser, mit oder ohne Elastomer-Mantel, ausgebildet sein. Unter "im Wesentlichen kreisförmig" soll in diesem Zusammenhang insbesondere verstanden werden, dass eine Querschnittsfläche des Aufzugtragmittels, die von einer äußeren Begrenzungslinie begrenzt wird, mindestens 80% einer Fläche eines kleinsten umschreibenden Kreises abdeckt.

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Tragmittelbefestigungseinrichtung mit einem Klemmelement, dessen Klemmfläche mit zunehmendem Drehwinkel einen zunehmenden radialen Abstand zur Schwenkachse aufweist, und mit einem eingelegten, noch ungeklemmten Aufzugtragmittel,
- Fig. 2: die Tragmittelbefestigungseinrichtung aus Fig. 1 mit festgeklemmtem Aufzugtragmittel,
- Fig. 3: eine weitere Tragmittelbefestigungseinrichtung mit einer Exzenterscheibe als Klemmelement und mit einem eingelegten, noch ungeklemmten Aufzugtragmittel,
- Fig. 4: die Tragmittelbefestigungseinrichtung aus Fig. 3 mit festgeklemmtem Aufzugtragmittel,
- Fig. 5: eine Variante des Klemmelements aus Fig. 4 in einer Seitenansicht,
- Fig. 6: eine weitere Tragmittelbefestigungseinrichtung mit drei Klemmelementen in einem Gehäuse,
- Fig. 7: eine weitere Tragmittelbefestigungseinrichtung mit auf mehreren Klemmebenen angeordneten Klemmelementen, und
- Fig. 8: einen Horizontalschnitt durch die Tragmittelbefestigungseinrichtung gemäss Fig. 7.

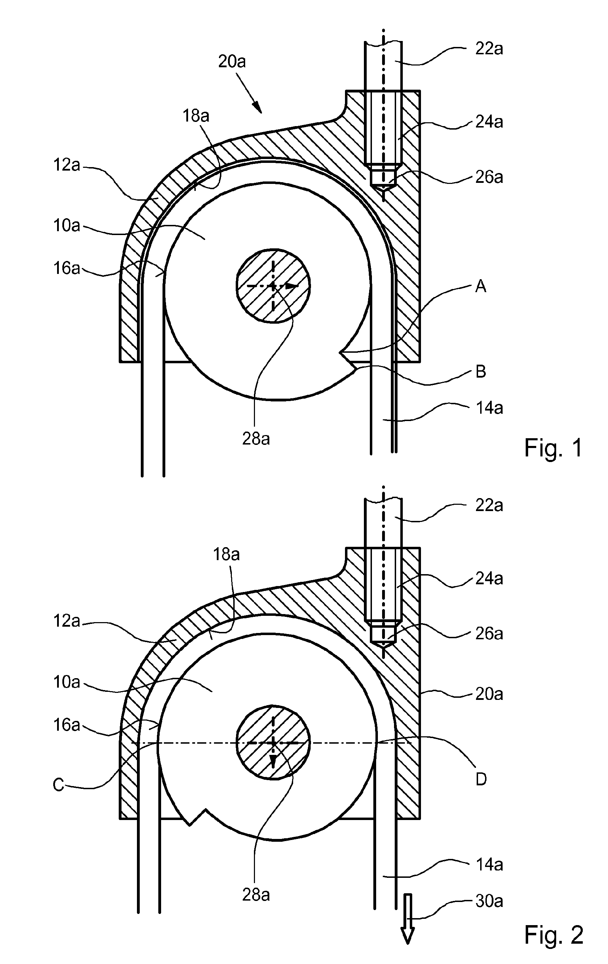

In den Figuren 1 und 2, 3 und 4, 5, 6, 7 und 8 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a, b und c hinzugefügt, wobei bezüglich gleich bleibender Bauteile, Merkmale und Funktionen auf die Beschreibung des Ausführungsbeispiels gemäss Figur 1 verwiesen werden kann.

Fig. 1 zeigt eine Tragmittelbefestigungseinrichtung einer Aufzugsanlage mit eingelegtem Aufzugtragmittel 14a in einer Anordnung, in der das Aufzugtragmittel 14a in die Tragmittelbefestigungseinrichtung einlegbar und darin wenigstens in seiner Längsrichtung frei beweglich ist. Die Tragmittelbefestigungseinrichtung umfasst ein Gehäuse 20a, das dazu vorgesehen ist, ein Klemmelement 10a wenigstens teilweise aufzunehmen und Tragkräfte vom Aufzugtragmittel 14a auf eine Stützstruktur in der Aufzugsanlage zu übertragen. Zu diesem Zweck ist eine Stange 22a mit angeformtem Gewinde 24a in eine Gewindebohrung 26a an der Oberseite des Gehäuses 20a der Tragmittelbefestigungseinrichtung eingeschraubt. Die Stange 22a ist mit einer nicht dargestellten Stützstruktur der Aufzugsanlage mechanisch verbunden.

Die Tragmittelbefestigungseinrichtung umfasst ausserdem das um eine Schwenkachse 28a schwenkbare Klemmelement 10a, ein Gegenhalteelement 12a, das hier Teil des Gehäuses 20a ist, und einen zwischen Klemmelement 10a und Gegenhalteelement 12a angeordneten Bereich des Aufzugtragmittels 14a. Wie im Folgenden dargestellt wird, sind das Klemmelement 10a, das Gegenhalteelement 12a und das Aufzugtragmittel 14a derart gestaltet und angeordnet, dass eine Zugbelastung des Aufzugtragmittels 14a eine Drehung des Klemmelements 10a um die Schwenkachse 28a bewirkt, wodurch das Aufzugtragmittel 14a zwischen Klemmelement 10a und Gegenhalteelement 12a festgeklemmt wird. Eine Zugbelastung des flachriemenartig ausgebildeten, mit einem Elastomer-Mantel ausgestatteten Aufzugtragmittels 14a, beispielsweise durch eine hier nicht dargestellte Aufzugskabine, ist an dem rechts dargestellten Ende des Aufzugtragmittels 14a vorgesehen. Eine solche Zugbelastung ist in Fig. 2 mit einem abwärts gerichteten Pfeil 30a gekennzeichnet.

Das Klemmelement 10a umfasst eine gekrümmte erste Klemmfläche 16a, und das Gegenhalteelement 12a umfasst eine gekrümmte zweite Klemmfläche 18a, die mit der gekrümmten ersten Klemmfläche 16a des Klemmelements 10a so zusammenwirkt, dass das Aufzugtragmittel 14a durch Drehung des Klemmelements 10a zwischen der ersten Klemmfläche 16a und der zweiten Klemmfläche 18a festgeklemmt wird.

Die gekrümmte erste Klemmfläche 16a des Klemmelements 10a bildet an einem beliebigen Ort ihres Umfangs bei einem Schnitt mit einer Ebene, in der die Schwenkachse 28a liegt, eine Linie, die parallel zur Schwenkachse 28a ist. Eine solche Linie entspricht einer Mantellinie eines geraden Zylinders, dessen Zylinderachse mit der in Fig. 1 dargestellten Schwenkachse 28a des Klemmelements 10a zusammenfällt.

Das Klemmelement 10a ist so ausgestaltet, dass bei einem rechtwinklig zur Schwenkachse 28a gelegten Schnitt durch das Klemmelement die Klemmfläche 16a eine Linie bildet, die in einem zusammenhängenden Bereich eines Drehwinkels um die Schwenkachse 28a, nämlich in einem Umfangsbereich, der sich im Gegenuhrzeigersinn von der Markierung "A" bis zur Markierung "B" erstreckt, einen zunehmenden radialen Abstand von der Schwenkachse 28a aufweist. Vorzugsweise erfolgt die Zunahme des radialen Abstands der genannten Linie proportional zum Drehwinkel um die Schwenkachse 28a. Die Zunahme des radialen Abstands entspricht somit im Wesentlichen der Zunahme des radialen Abstands einer archimedischen Spirale.

Das Gehäuse 20a der Tragmittelbefestigungseinrichtung und das Gegenhalteelement 12a sind einstückig ausgebildet. Selbstverständlich können diese Elemente auch aus separaten Teilen bestehen.
Das Gegenhalteelement 12a ist derart ausgestaltet, dass bei einem rechtwinklig zur Schwenkachse 28a gelegten Schnitt durch das Gegenhalteelement die Klemmfläche 18a des Gegenhalteelements 12a zumindest in einem Teilbereich eine Linie bildet, die eine Zunahme des radialen Abstands von der Schwenkachse aufweist, die im Wesentlichen der Zunahme des radialen Abstands einer archimedischen Spirale entspricht. Die drehwinkelproportionale Zunahme des radialen Abstands dieser Spirale entspricht dabei im Wesentlichen der drehwinkelproportionalen Zunahme des radialen Abstands derjenigen Spirale, die die Geometrie der Klemmfläche 16a des Klemmelements 10a definiert.

Fig. 2 zeigt die Tragmittelbefestigungseinrichtung gemäss Fig. 1 in einer Situation, in der das Aufzugtragmittel 14a innerhalb der Tragmittelbefestigungseinrichtung zwischen dem Klemmelement 10a und Gegenhalteelement 12a in einem Bereich zwischen den Markierungen "C" und "D" festgeklemmt ist. Durch das Zusammenwirken der spiralförmigen Klemmfläche des Klemmelements mit der spiralförmigen Klemmfläche des Gegenhalteelements resultiert beim Klemmen über den ganzen Bereich C - D eine praktisch gleich hohe Flächenpressung am Aufzugtragmittels 14a.

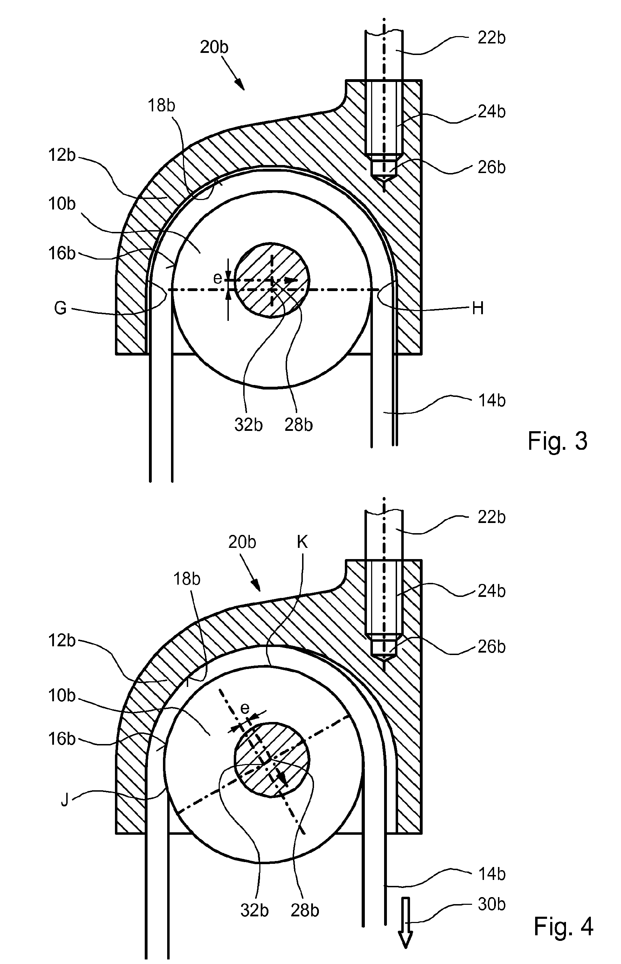

In Fig. 3 ist eine weitere Tragmittelbefestigungseinrichtung einer Aufzugsanlage mit eingelegtem Aufzugtragmittel 14b in einer Situation dargestellt, in der das Aufzugtragmittel 14b innerhalb der Tragmittelbefestigungseinrichtung mindestens in Längsrichtung frei beweglich ist. Das Aufzugtragmittel 14b ist als rundes oder als flaches Seil aus Stahldraht mit einem Elastomer-Mantel ausgebildet und weist einen im Wesentlichen kreisförmigen oder einen rechteckigen Querschnitt auf. Die Tragmittelbefestigungseinrichtung umfasst wie in Fig. 1 ein Gehäuse 20b, das dazu vorgesehen ist, ein Klemmelement 10b wenigstens teilweise aufzunehmen und Tragkräfte auf eine Stützstruktur zu übertragen. Zu diesem Zweck ist auch bei dieser Ausführungsform eine Stange 22b mit angeformtem Gewinde 24b in eine Gewindebohrung 26b an der Oberseite des Gehäuses 20b der Tragmittelbefestigungseinrichtung eingeschraubt. Die Stange 22b ist mit einer nicht dargestellten Stützstruktur der Aufzugsanlage mechanisch verbunden.

Auch in diesem Ausführungsbeispiel bewirkt eine mit einem abwärts gerichteten Pfeil gekennzeichnete Zugbelastung 30b des Aufzugtragmittels 14b, beispielsweise durch eine nicht näher dargestellte Aufzugskabine, eine Drehung des Klemmelements 10b um eine Schwenkachse 28b, wodurch das Aufzugtragmittel 14b zwischen dem Klemmelement 10b und einem Gegenhalteelement 12b festgeklemmt wird.

Das Klemmelement 10b ist hier als so genannte Exzenterrolle bzw. Exzenterscheibe ausgestaltet, die um die genannte Schwenkachse 28b schwenkbar im Gehäuse 20b gelagert ist. Bei einem rechtwinklig zur Schwenkachse 28b gelegten Schnitt durch das Klemmelement 10b bildet dessen Klemmfläche 16b eine Begrenzungslinie, die zumindest in einem zusammenhängenden Bereich ein Kreisbogen ist, dessen Kreiszentrum 32b um eine gewisse Distanz "e", d. h. , um die Exzentrizität "e" von der Schwenkachse 28b entfernt angeordnet ist.

Eine gekrümmte Klemmfläche 18b des Gegenhalteelements 12b ist in einem Bereich zwischen den Markierungen "G" und "H" so ausgestaltet, dass sie mit einer Schnittebene, die senkrecht zur Schwenkachse 28b liegt, eine Linie bildet, die einem Kreisbogen entspricht, dessen Kreiszentrum bei der dargestellten Ausführungsform mit der Schwenkachse 28b zusammenfällt. Um die Klemmwirkung noch zu optimieren, könnte das Kreiszentrum der Klemmfläche 18b des Gegenhalteelements 12b jedoch auch etwas exzentrisch in Bezug auf die Schwenkachse 28b angeordnet werden.

Die Fig. 4 zeigt die Tragmittelbefestigungseinrichtung aus Fig. 3 in einer Anordnung, in der das Aufzugtragmittel 14b innerhalb der Tragmittelbefestigungseinrichtung zwischen Klemmelement 10b und Gegenhalteelement 12b in einem Bereich zwischen den Markierungen "J" und "K" festgeklemmt ist. Eine Flächenpressung des Aufzugtragmittels 14b variiert je nach einer Größe eines Abstands zwischen Klemmelement 10b und Gegenhalteelement 12b. Eine weitere Verdrehung des Klemmelements im Uhrzeigersinn infolge der Zugkraft 30b im Aufzugtragmittel 14b würde eine Erhöhung der Klemmwirkung durch Reduktion der Klemmspaltbreite und Verlängerung der Klemmlänge bewirken.

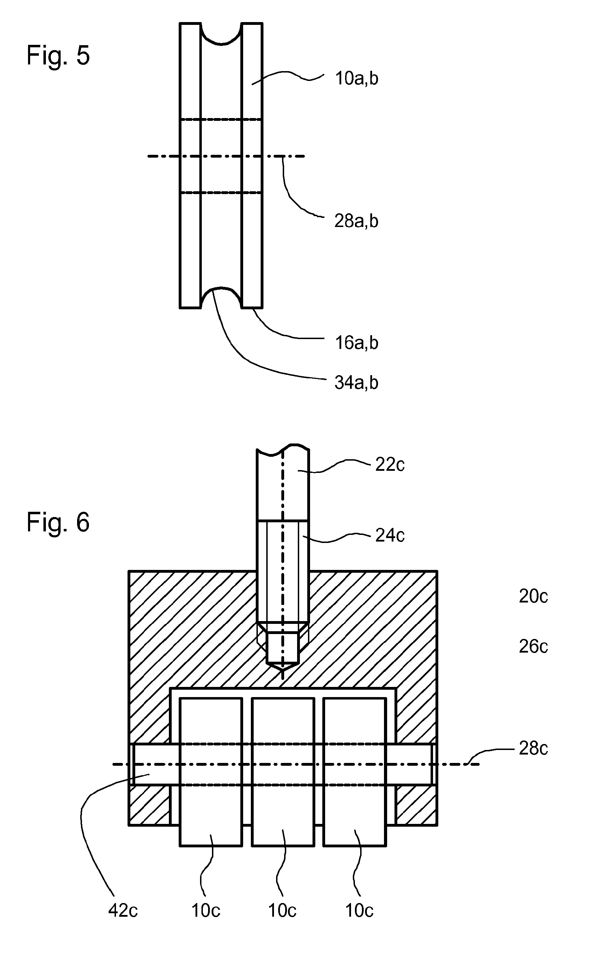

Fig. 5 zeigt ein Klemmelement 10a,b einer Tragmittelbefestigungseinrichtung wie in den Fig. 1 bis 4 dargestellt. Das Klemmelement 10a,b ist jedoch zum Klemmen eines im Wesentlichen runden Aufzugtragmittels ausgebildet. Mit dem Bezugszeichen 28ab ist die Schwenkachse des Klemmelements 10a,b bezeichnet. Das Klemmelement 10a,b kann eine Klemmfläche 16a,b aufweisen, die spiralförmig ausgebildet oder als exzentrisch zur Schwenkachse 28a,b angeordneter Kreisbogen ausgebildet ist. Diese Klemmfläche 16a,b des Klemmelements 10a,b ist in einem zusammenhängenden Bereich eines Drehwinkels mit einer entlang einer Umfangsrichtung verlaufenden konkaven Ausnehmung 34a,b versehen, die zur teilweisen Aufnahme des nicht dargestellten, beispielsweise als rundes Seil aus Stahldraht mit Elastomer-Mantel ausgebildeten Aufzugtragmittels dient.

Fig. 6 zeigt eine weitere Tragmittelbefestigungseinrichtung mit drei in einem Gehäuse 20c angeordneten, unabhängig voneinander schwenkbaren Klemmelementen 10c zur Befestigung von drei flachriemenartigen Aufzugtragmitteln, die in Fig. 6 nicht dargestellt sind. Die drei Klemmelemente 10c weisen eine gemeinsame Schwenkachse 28c auf, um die sie unabhängig voneinander schwenkbar sind. Ein Achsenelement 42c, das entlang der Schwenkachse 28c angeordnet ist, ist zu beiden Seiten des Gehäuses 20c in diesem unbeweglich gelagert. Durch die sich abhängig von der Zugbelastung in den mit den Klemmelementen 10c zusammenwirkenden Aufzugtragmitteln selbst einstellenden Drehungen der Klemmelemente 10c können Unterschiede in der Länge der Aufzugtragmittel zumindest teilweise ausgeglichen werden, wodurch eine Vergleichmäßigung der jeweiligen Zugbelastungen erreicht werden kann.

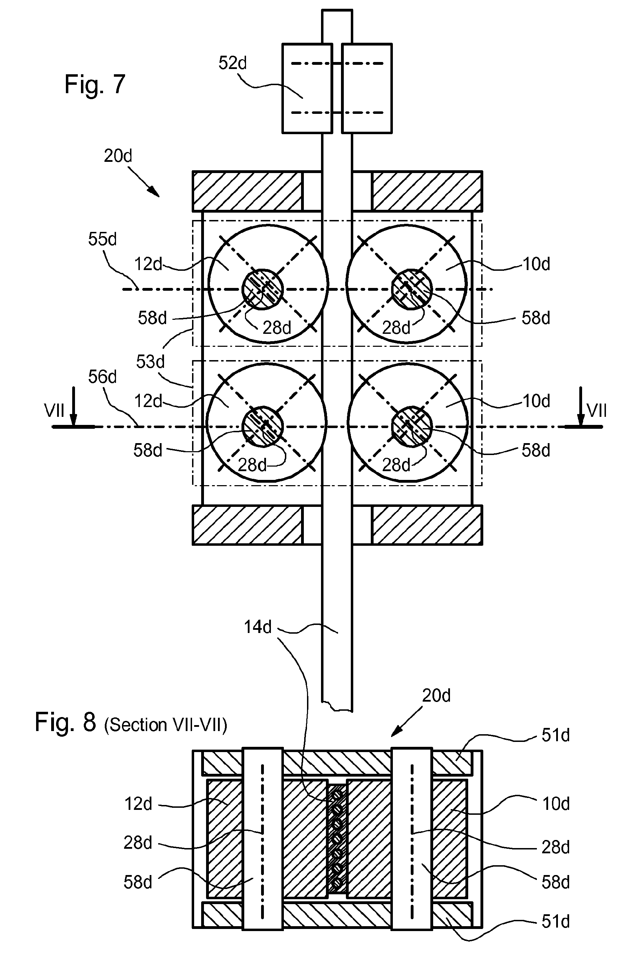

Fig. 7 zeigt eine Tragmittelbefestigungseinrichtung bei welcher ein einziges flaches Aufzugtragmittel 14d auf zwei in Längsrichtung des Aufzugtragmittels hintereinander angeordneten Klemmebenen 55d, 56d mit Hilfe von jeweils einer Klemmelementgruppe 53d festgeklemmt bzw. fixiert wird. Jede Klemmelementgruppe 53d umfasst wenigstens ein schwenkbares Klemmelement 10d, das mit einem Gegenhalteelement 12d zusammenwirkt, wobei bei der hier dargestellten Ausführungsform die Gegenhalteelemente 12d als schwenkbare Gegenklemmelemente ausgebildet sind. Die Klemmelemente 10d wie auch die als Gegenklemmelemente ausgebildeten Gegenhalteelemente 12d sind auf in einem gemeinsamen Gehäuse 20d befestigten Achselementen 58d gelagert und um Schwenkachsen 28d schwenkbar. Das Gehäuse 20d ist auf eine hier nicht dargestellte Weise an einer Stützstruktur der Aufzugsanlage fixiert.

Das Aufzugtragmittel 14d ist auf jeder Klemmebene 55d, 56d zwischen einem Klemmelement 10d und einem als Gegenklemmelement ausgebildeten Gegenhalteelement 12d eingeklemmt. Als Klemmelemente 10d wie auch als Gegenklemmelemente sind hier Exzenterrollen dargestellt, die jedoch auch durch schwenkbare Klemmelemente mit spiralförmig angeordneten Klemmflächen (wie vorstehend mit Fig. 1, 2 offenbart) ersetzbar sind. Mit zunehmender Zugkraft im Aufzugtragmittel 14d werden die Klemmelemente 10d und die als Gegenklemmelemente ausgebildeten Gegenhalteelemente 12d um einen gewissen Drehwinkel weiter geschwenkt, wodurch sich die zwischen den Klemmelementen bzw. Gegenklemmelementen und dem Aufzugtragmittel 14d erzeugten Klemmkräfte erhöhen. Die Klemmkräfte in den Klemmelementen und Gegenklemmelementen (Exzenterrollen) erzeugen mit zunehmendem Drehwinkel ein zunehmendes Drehmoment um die exzentrisch angeordneten Schwenkachsen 28d, welches Drehmoment dem durch die Zugkraft des Aufzugtragmittels in der Exzenterrolle erzeugten Drehmoment entgegenwirkt. Das Aufzugtragmittel lässt sich daher nur so weit zwischen den Klemmelementen und den Gegenklemmelementen abwärts ziehen, bis zwischen den genannten Drehmomenten ein Gleichgewicht vorhanden ist.

Mit 52d ist ein zusätzliches Sicherheitselement bezeichnet, das vorzugsweise durch Klemmung auf dem Ende des Aufzugtragmittels 14d fixiert wird und im Extremfall das Herausziehen des Aufzugtragmittels 14d aus der Tragmittelbefestigungseinrichtung verhindern soll.

Fig. 8 zeigt einen Schnitt VII-VII durch die untere Klemmebene 56d mit einer der Klemmelementgruppen 53d der Tragmittelbefestigungseinrichtung gemäss Fig. 7. Auf dieser rechtwinklig zur Längsrichtung des Aufzugtragmittels 14d angeordneten Klemmebene 56d sind zwei in der Klemmebene liegende und zueinander parallele Achselemente 58d in den Wänden 51d des Gehäuses 20d abgestützt. Auf dem einen Achselement 58d ist ein Klemmelement 10d und auf dem anderen Achselement 58d ist ein Gegenhalteelement 12d jeweils um die Schwenkachsen 28d schwenkbar gelagert, wobei hier Exzenterrollen sowohl als Klemmelemente 10d als auch als Gegenhalteelement 12d verwendet sind. Wie bereits erwähnt, sind die Exzenterrollen jedoch auch durch schwenkbare Klemmelemente bzw. Gegenhalteelemente mit spiralförmig angeordneten Klemmflächen ersetzbar. Zwischen jeweils einem Klemmelement 10d und einem Gegenhalteelement 12d ist ein flachriemenartiges Aufzugtragmittel 14d eingeklemmt, das im Wesentlichen aus einen Riemenkörper aus einem elastomeren Material mit darin eingebetteten flexiblen Zugträgern aus Stahldrähten oder Kunstfasern besteht. Die vorgeschlagene Tragmittelbefestigungseinrichtung ist selbstverständlich auch für Aufzugtragmittel mit im Wesentlichen runden Querschnitten anwendbar, wobei die Klemmflächen der Klemmelemente und Gegenhalteelemente wie vorstehend beschrieben konkave Ausnehmungen zur teilweisen Aufnahme des Aufzugtragmittels aufweisen.

Eine solche Tragmittelbefestigungseinrichtung kann auch mehr als zwei Klemmebenen umfassen. Um zu erreichen, dass in den einzelnen Klemmebenen möglichst gleich grosse Klemm- und Haltekräfte auftreten, kann bei unterschiedlichen Klemmebenen zugeordneten Klemmelementen die Exzentrizität ihrer Lagerung bzw. die Steigung spiralförmig angeordneter Klemmflächen unterschiedlich gross ausgeführt werden.

Die mit Fig. 7 und 8 beschriebene Tragmittelbefestigungseinrichtung hat den besonderen Vorteil, dass sich die Aufzugtragmittel durch einfaches Aufwärtsziehen nachspannen lassen.

## Patentansprüche

1. Tragmittelbefestigungseinrichtung einer Aufzugsanlage mit mindestens einem um eine Schwenkachse (28) schwenkbaren Klemmelement (10), mindestens einem Gegenhalteelement (12) und einem zwischen dem Klemmelement (10) und dem Gegenhalteelement (12) angeordneten Bereich eines Aufzugtragmittels (14), wobei das mindestens eine Klemmelement (10), das mindestens eine Gegenhalteelement (12) und das Aufzugtragmittel (14) derart gestaltet und angeordnet sind, dass eine Zugbelastung des Aufzugtragmittels (14) eine Drehung des mindestens einen Klemmelements (10) um seine Schwenkachse (28) bewirkt, wodurch das Aufzugtragmittel (14) zwischen einer Klemmfläche (16) des Klemmelements (10) und dem Gegenhalteelement (12) festgeklemmt wird.

2. Tragmittelbefestigungseinrichtung nach Anspruch 1,
**dadurch gekennzeichnet, dass**
das Klemmelement (10) eine gekrümmte erste Klemmfläche (16) umfasst und das Gegenhalteelement (12) eine zweite Klemmfläche (18) umfasst, die mit der gekrümmten ersten Klemmfläche (16) des Klemmelements (10) so zusammenwirkt, dass das Aufzugtragmittel (14) durch Drehung des Klemmelements (10) zwischen der gekrümmten ersten Klemmfläche (16) und der zweiten Klemmfläche (18) festgeklemmt wird.

3. Tragmittelbefestigungseinrichtung nach Anspruch 1 oder 2,
**dadurch gekennzeichnet, dass**
die Klemmfläche (16a) des schwenkbaren Klemmelements (10a) um dessen Schwenkachse (28a) herum angeordnet ist, wobei ein rechtwinklig zur Schwenkachse (28a) gelegter Schnitt durch das Klemmelement (10a) von einer durch die Klemmfläche (16a) erzeugten Linie begrenzt ist, welche Linie in zumindest einem zusammenhängenden Bereich eines Drehwinkels um die Schwenkachse (28a) einen in einer Umfangsrichtung zunehmenden radialen Abstand von der Schwenkachse (28a) aufweist.

4. Tragmittelbefestigungseinrichtung nach Anspruch 3,
**dadurch gekennzeichnet, dass**
eine Zunahme des radialen Abstands der genannten Linie im Wesentlichen einer Zunahme des radialen Abstands einer archimedischen Spirale entspricht.

5. Tragmittelbefestigungseinrichtung nach Anspruch 1 oder 2,
**dadurch gekennzeichnet, dass**
die Klemmfläche (16b) des schwenkbaren Klemmelements (10b) um dessen Schwenkachse (28b) herum angeordnet ist, wobei ein rechtwinklig zur Schwenkachse (28b) gelegter Schnitt durch das Klemmelement (10b) von einer durch die Klemmfläche (16b) erzeugten Linie begrenzt ist, die in zumindest einem zusammenhängenden Bereich eines Drehwinkels um die Schwenkachse (28b) als Kreisbogen ausgebildet ist.

6. Tragmittelbefestigungseinrichtung nach einem der Ansprüche 1 bis 5,
**dadurch gekennzeichnet, dass**
bei einem Schnitt durch das Klemmelement (10a, 10b) in einer die Schwenkachse (28a, 28b) enthaltenden Ebene die Klemmfläche (16a, 16b) des Klemmelements (10a, 10b) in zumindest einem zusammenhängenden Bereich eines Drehwinkels um die Schwenkachse (28a, 28b) eine Linie bildet, die parallel zur Schwenkachse (28a, 28b) ist.

7. Tragmittelbefestigungseinrichtung nach einem der Ansprüche 1 bis 6,
**dadurch gekennzeichnet, dass**
die Klemmfläche (16a,b) des Klemmelements (10a,b) in zumindest einem zusammenhängenden Bereich eines Drehwinkels um die Schwenkachse (28a,b) zur zumindest teilweisen Aufnahme des Aufzugtragmittels (14) eine entlang einer Umfangsrichtung verlaufende konkave Ausnehmung (34a,b) aufweist.

8. Tragmittelbefestigungseinrichtung nach einem der Ansprüche 1 bis 7,
**dadurch gekennzeichnet, dass**
das Gegenhalteelement (12a, 12b) in einem Gehäuse (20a, 20b) angeordnet ist, in dem auch das mindestens eine Klemmelement (10a, 10b) um seine Schwenkachse (28a, 28b) schwenkbar angeordnet ist, wobei das Gegenhalteelement (12a, 12b) die zweite Klemmfläche (18a, 18b) umfasst.

9. Tragmittelbefestigungseinrichtung nach Anspruch 8,
**dadurch gekennzeichnet, dass**
ein rechtwinklig zur Schwenkachse (28a, 28b) gelegter Schnitt durch die zweite Klemmfläche (18a, 18b) des Gegenhalteelements (12a, 12b) von einer durch die zweite Klemmfläche (18a, 18b) erzeugten Linie begrenzt ist, welche Linie in zumindest einem zusammenhängenden Bereich eines Drehwinkels um die Schwenkachse (28a, 28b) einen in einer Umfangsrichtung zunehmenden radialen Abstand von der Schwenkachse (28a, 28b) aufweist oder Teil einer Kreisperipherie ist.

10. Tragmittelbefestigungseinrichtung nach Anspruch 8 oder 9,
**dadurch gekennzeichnet, dass**
das Gehäuse (20a, 20b) und das Gegenhalteelement (12a, 12b) zumindest teilweise einstückig ausgebildet sind.

11. Tragmittelbefestigungseinrichtung nach einem der Ansprüche 8 bis 10,
**dadurch gekennzeichnet, dass**
im Gehäuse (20c) mindestens zwei unabhängig voneinander schwenkbare Klemmelemente (10c) angeordnet sind.

12. Tragmittelbefestigungseinrichtung zumindest nach Anspruch 11,
**dadurch gekennzeichnet, dass**
die zumindest zwei im Gehäuse (20c) angeordneten Klemmelemente (10c) eine gemeinsame Schwenkachse (28c) aufweisen.

13. Tragmittelbefestigungseinrichtung nach einem der Ansprüche 1 bis 8,
**dadurch gekennzeichnet, dass**
das Gegenhalteelement (12d) als Gegenklemmelement ausgeführt ist, wobei das Gegenhalteelement (12d) und das Klemmelement (10d) symmetrisch bzw. spiegelbildlich zum dazwischen angeordneten Aufzugtragmittel (14d) und um jeweils eine zugehörige Schwenkachse (28d) schwenkbar so angeordnet sind, dass eine Zugbelastung des Aufzugtragmittels (14d) eine Drehung des Klemmelements (10d) wie auch des Gegenhalteelements (12d) bewirkt, wodurch das Aufzugtragmittel (14d) zwischen dem Klemmelement (10d) und dem als Gegenklemmelement ausgeführten Gegenhalteelement (12d) festgeklemmt wird.

14. Tragmittelbefestigungseinrichtung nach Anspruch 13,
**dadurch gekennzeichnet, dass**
die Tragmittelbefestigungseinrichtung mindestens zwei Klemmelementgruppen (53d) enthält, wobei jede der Klemmelementgruppen ein Klemmelement (10d) und ein Gegenhalteelement (12d) in Form eines Gegenklemmelements umfasst und die mindestens zwei Klemmelementgruppen (53d) gemeinsam auf ein einziges Aufzugtragmittel (14d) wirken.

15. Tragmittelbefestigungseinrichtung nach einem der vorhergehenden Ansprüche,
**dadurch gekennzeichnet, dass**
die Tragmittelbefestigungseinrichtung zumindest ein flachriemenartiges Aufzugtragmittel (14a, 14b, 14d) umfasst.

16. Tragmittelbefestigungseinrichtung nach einem der vorhergehenden Ansprüche,
**dadurch gekennzeichnet, dass**
die Tragmittelbefestigungseinrichtung zumindest ein Aufzugtragmittel mit im Wesentlichen kreisförmigem Querschnitt umfasst.

17. Aufzugsanlage mit zumindest einer Tragmittelbefestigungseinrichtung nach einem der Ansprüche 1 bis 16.
